# FASCICULE DE BREVET EUROPEEN

(11) **EP 1 352 839 B1**
(45) Date de publication et mention de la délivrance du brevet: **30.06.2010**
(21) Numéro de dépôt: 03290694.3
(22) Date de dépôt: 19.03.2003
(51) Int. Cl.: B65D 5/42, B65D 81/36, F16N 31/00

(54) **Emballage pour huile de moteur**
Verpackung für Motoröl
Packaging for Engine oil

(30) Priorité: 19.03.2002 FR 0203376
(43) Date de publication de la demande: 15.10.2003
(73) Titulaire: DS Smith Kaysersberg, 68320 Kunheim (FR)
(72) Inventeur: Leboulleux, Dominique, 60190 Hemevillers (FR)
(74) Mandataire: David, Daniel

(56) Documents cités:
- US-A- 4 098 398
- US-A- 4 133 428
- US-A- 4 856 652
- US-A- 5 092 457
- US-A- 5 601 230

## Description

La présente invention se rapporte au domaine de l'emballage, en particulier des emballages réalisés dans un matériau semi-rigide tel que le carton ondulé. Elle vise un emballage pour huile de moteur selon le préambule de la revendication 1.

Le nombre de véhicules automobiles en circulation est très important. Le moteur de ces derniers, quand il est à explosion, est lubrifié avec de l'huile qui doit être renouvelée périodiquement. Une partie des propriétaires, pour des raisons d'économie ou autres, procède chez soi à la vidange du moteur. Ils n'apportent pas le véhicule dans un garage pourvu de l'équipement nécessaire pour récupérer et stocker l'huile usagée avant son recyclage éventuel.

Cette huile usagée est très polluante. Les manipulations en dehors des installations convenablement équipées font donc courir un risque non négligeable à l'environnement. Ce risque est d'autant plus important que la récupération de l'huile de moteur ne peut être faite simplement dans un récipient de forme commune puisque l'orifice de vidange se trouve sous les moteurs, en général, au niveau d'un point bas difficile d'accès.

Malheureusement, il n'est pas possible d'obliger chaque propriétaire d'utiliser les installations pourvues de ces moyens de récupération. En outre, il existe des situations où l'utilisateur du véhicule est contraint d'effectuer cette opération par lui-même.

Le brevet US 4098398 décrit un emballage de boîtes d'huile moteur selon le préambule de la revendication 1 , qui est aménagé de manière à pouvoir être utilisé comme récipient pour recueillir l'huile de vidange. Il comprend notamment une sache avec un entonnoir que l'on peut adapter au carter d'huile d'un moteur de voiture.

L'invention se propose d'offrir aux utilisateurs de véhicules automobiles à moteurs à explosion, la possibilité de récupérer l'huile usagée dans de bonnes conditions s'ils décident ou bien s'ils doivent y procéder eux-mêmes.

L'invention propose un moyen qui permet la récupération et le stockage de l'huile de manière sûre pour l'environnement.

L'invention propose également un moyen pratique et de mise en oeuvre simple.

L'invention propose également un moyen peu onéreux.

L'invention est définie par un emballage selon la revendication 1 annéxée.

Grâce à l'invention, on réunit dans un même emballage le récipient qui contient l'huile de renouvellement et celui qui permet la récupération de l'huile usagée. Cet assemblage permet de résoudre le problème à la fois de la récupération et du stockage de l'huile usagée ainsi que son transport vers une station de stockage.

Il permet de réduire le volume global de l'ensemble sans qu'il perde de son efficacité.

Conformément à une autre caractéristique, une portion de paroi détachable est découpée et rainée de manière à former un entonnoir après mise en volume. En particulier, ladite portion de paroi présente des raines disposées en étoile. On améliore ainsi les moyens assurant une récupération efficace, à un moindre coût.

Conformément à une autre caractéristique, une paroi comprend au moins une ouverture pour la préhension de la poignée d'un bidon placé à l'intérieur. On peut ainsi réaliser l'emballage de façon économique car l'enveloppe n'a pas besoin de supporter la charge du récipient plein.

Conformément à une autre caractéristique l'emballage comprend un moyen de réduction de sa hauteur quand il est en position de récupération de liquide usagé. Grâce à cette caractéristique, on peut glisser l'ensemble sous le moteur du véhicule, le cas échéant avec un entonnoir. Selon une réalisation particulière, ledit moyen est constitué de deux raines parallèles ménagées dans les parois adjacentes à la paroi contenant la partie détachable.

Avantageusement et de façon très économique, l'emballage est réalisé à partir d'une feuille de carton ondulé convenablement découpé et rainé.

Un mode de réalisation de l'invention va être décrit plus en détail, en référence aux dessins annexés sur lesquels
la figure 1 représente un emballage de l'invention contenant un bidon d'huile,
la figure 2 représente le même emballage duquel on a retiré le bidon et dégagé la sache,
la figure 3 représente la boîte, avec la sache en place,
la figure 4 représente la boîte légèrement réduite en hauteur l'entonnoir étant en place dans l'orifice de la sache,
La figure 5 représente une plaque de carton ondulé découpé pour former la boîte.

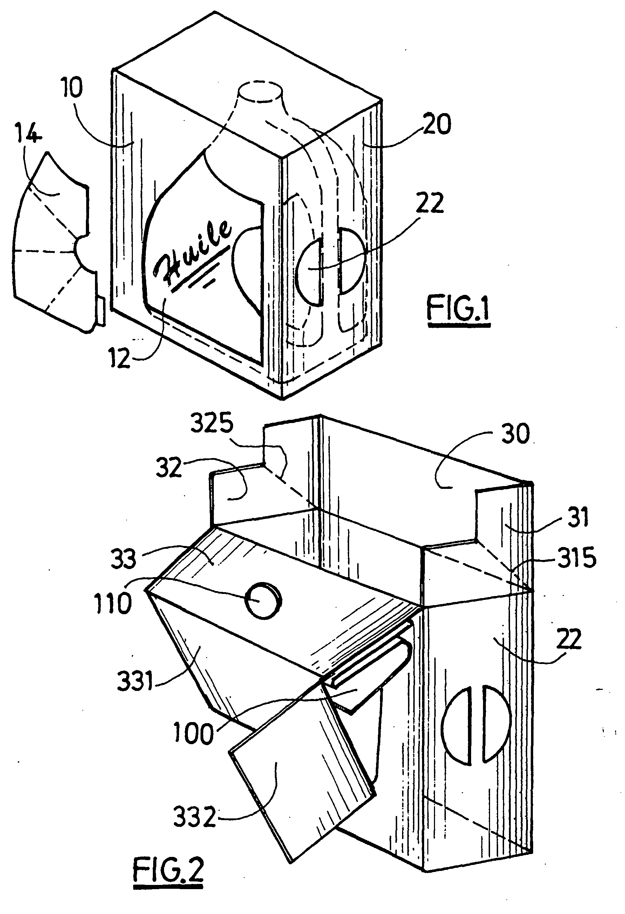

L'emballage 1 de la figure 1 est réalisé en carton ondulé, de préférence double face, et est en forme de boîte parallélépipédique contenant un bidon d'huile B. Ce bidon est par exemple en matière plastique avec une contenance de 5 litres. La boîte présente sur la paroi 10 une fenêtre 12 à travers laquelle le bidon est visible. Sur le côté droit 20, par rapport à la figure, on a ménagé deux ouvertures en découpant deux languettes 22 en demi-lunes. On les plie vers l'intérieur de la boîte de manière à enserrer la poignée de préhension du bidon. On saisit ainsi ensemble la poignée du bidon et le carton. Les efforts sont donc reportés sur le bidon ce qui garantit une bonne cohésion entre les deux.

En vue éclatée, on voit qu'une partie 14 est détachée de la paroi 10 pour dégager la fenêtre 12. Cette partie 14 constitue l'entonnoir qui est présenté plus loin.

La figure 2 montre le même emballage dont on a retiré le bidon, et après avoir ouvert le couvercle dans sa partie haute. Le couvercle est constitué ici d'un rabat 30 solidaire par un bord respectivement de deux rabats latéraux 31 et 32. Ces deux derniers rabats peuvent se plier chacun le long d'une ligne à 45°, 315 et 325, par rapport au bord supérieur de la boîte. On ferme le couvercle en poussant les deux rabats 31 et 32 vers l'intérieur. Ils entraînent alors le rabat 30 en fermeture.

Conformément à un mode de réalisation non représenté, on détache les rabats 31 et 32. Ils peuvent ainsi être pliés indépendamment du rabat 30. Cette solution est plus pratique pour la mise en volume.

En face de ce rabat, sur le bord opposé, on voit un rabat 33, librement articulé sur le bord supérieur de la boîte. La largeur de ce rabat est la même que celle du rabat 30 et de la boîte. Il se prolonge sur son bord opposé à celui de l'articulation par un second rabat 331, sensiblement de même dimension. Ce rabat 331 comprend lui-même, le long d'un bord latéral, un rabat 332, articulé donc autour d'un axe perpendiculaire aux deux précédents.

On voit une sache 100 à l'état replié sous le rabat 33. La sache est réalisée dans un matériau souple, étanche et suffisamment résistant pour contenir de l'huile usagée, éventuellement chaude. Elle débouche par son orifice au travers du rabat 33. Cet orifice est renforcé par un anneau 110, de préférence en matière plastique. L'anneau, en fait, traverse la paroi du rabat 33 par une découpe circulaire qui y a été pratiquée et dans laquelle il est bloqué. Il assure ainsi le maintien de la sache au rabat.

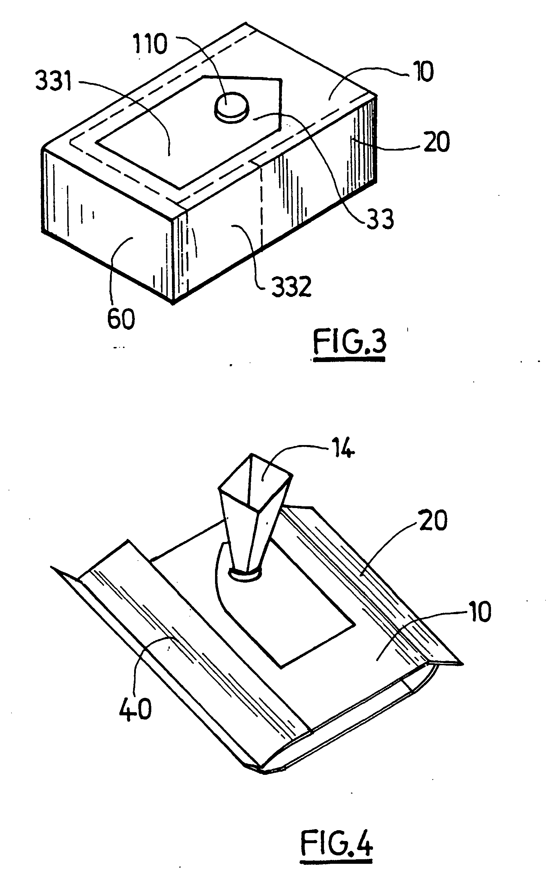

Sur la figure 3, on a représenté la boîte avec la sache en position pour recevoir un liquide. Ici les rabats 33 et 331 ont été plaqués à l'intérieur de la paroi 10. Ils sont visibles à travers la fenêtre. On voit donc que l'anneau 110 définissant l'ouverture de réception est tourné vers l'extérieur. Le rabat 332, en restant perpendiculaire au rabat 331 contribue à son maintien contre la paroi 10. La sache 100 que l'on ne voit pas peut donc se développer en volume à l'intérieur de la boîte.

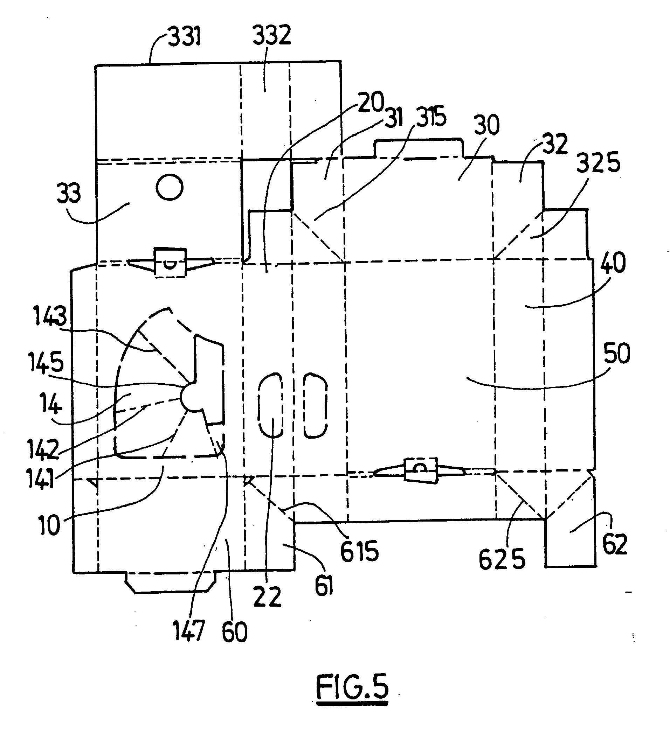

Sur la figure 4, on a représenté la même boîte dans un état légèrement aplati. Il a suffi de dégager les deux couvercles, aux deux extrémités, puis de plier les deux parois, 20 et 40, chacune le long d'une ligne parallèle, entre les deux bords. Sur cette figure, on a représenté l'entonnoir qui a été formé à partir de la découpe 14 par pliage autour de lignes de pliage disposées en étoiles, comme on le voit sur la figure 5.

La figure 5 représente la boîte des figures précédentes développée à plat. Il s'agit en fait d'une plaque de carton qui a été convenablement découpée pour former après mise en volume la boîte emballage de l'invention.

On retrouve les mêmes références que précédemment désignant les mêmes éléments.

La plaque comprend deux panneaux 10 et 50 séparés par un panneau 20. Ils forment, avec le panneau 40, les quatre faces de la boîte emballage. Les panneaux 30, 31 et 32 dans le prolongement des panneaux 50, 20 et 40 respectivement, forment le couvercle d'un côté. De l'autre côté, ce sont les panneaux 60, 61 et 62 qui forment le couvercle. Une languette le long du panneau 10 permet de refermer le panneau sur le panneau 40 et de l'y fixer.

Dans le prolongement du panneau 10, à l'opposé du panneau 60, on trouve le rabat 33, prolongé par le rabat 331 et lui-même par le rabat 332.

Tous ces panneaux sont délimités et séparés entre eux par des raines qui consistent en des zones que l'on a écrasées au moyen d'une lame pour former des articulations et permettre le pliage des panneaux les uns par rapport aux autres.

Les lignes 315 et 325 sont dites « slittées », c'est-à-dire percées en pointillés, pour faciliter le pliage.

Les panneaux 40 et 20 sont rainés sur toute leur longueur afin comme on l'a vu plus haut, de permettre la réduction de hauteur de la boîte lorsqu'elle se trouve en position pour recevoir l'huile de vidange d'un moteur.

La sache est mise en place sur la plaque de carton par son anneau 110 que l'on introduit dans l'orifice que l'on a ménagé dans le rabat. Ce rabat 33 est placé sous le couvercle 30 quand la boîte assure la fonction d'emballage d'un bidon.

La fenêtre 12 est formée de la découpe de la pièce 14. Cette pièce 14 comprend des raines en étoile ou rayons 141, 142 et 143 à partir d'une découpe en arc de cercle 145. La découpe de la pièce 14 comprend aussi une languette 147. Après avoir détaché la pièce 14 du panneau 10, on forme un entonnoir en pliant le carton autour des trois lignes de pliage 141, 142 et 143 et en glissant la languette 147 dans une fente ménagée dans un panneau adjacent à la ligne de pliage 143. L'entonnoir est formé ainsi avec un orifice étroit, délimité par la découpe 145.

La fonction de cette boîte, outre de servir d'emballage à un bidon d'huile est également de recueillir un liquide. Pour l'huile de vidange d'un moteur, après avoir enlevé le bidon de la boîte, on replie le rabat 33 avec le rabat 331 contre la face interne de la paroi 10. On met en volume l'entonnoir que l'on introduit par sa pointe dans l'ouverture formée par l'anneau.

On glisse le tout sous le véhicule au droit de l'orifice de vidange du carter et on recueille l'huile.

## Revendications

1. Emballage en matériau semi-rigide comportant un compartiment pour bidon d'huile de moteur ou autre liquide fermé par un couvercle (30) et dont au moins une paroi (10) est prolongée par un rabat (33), et une sache (100) de récupération de liquide en matériau souple avec un orifice de remplissage équipé d'un anneau rigide (110), **caractérisé par le fait que** la sache est montée sur ledit rabat (33), sous ledit couvercle (30), ladite paroi (10) comportant une partie détachable (14) libérant une fenêtre, de manière à permettre à l'orifice de la sache de venir déboucher à travers celle-ci, après avoir détaché la partie détachable (14) et replié le rabat (33) contre la face interne de ladite paroi (10).

2. Emballage selon la revendication précédente, dans lequel l'anneau rigide (110) comprend un moyen de fixation au rabat (33).

3. Emballage selon l'une des revendications précédentes, dans lequel la portion de paroi (14) détachable est découpée et rainée de manière à former un entonnoir après mise en volume.

4. Emballage selon la revendication précédente, dans lequel ladite portion de paroi (14) présente des raines disposées en étoile.

5. Emballage selon l'une des revendications précédentes, dans lequel une paroi (20) comprend au moins une ouverture pour la préhension de la poignée d'un bidon placé à l'intérieur.

6. Emballage selon l'une des revendications précédentes, comprenant un moyen de réduction de sa hauteur quand il est en position de récupération de liquide usagé.

7. Emballage selon la revendication précédente, dans lequel ledit moyen est constitué de deux raines parallèles ménagées dans les parois adjacentes à la paroi contenant la partie détachable.

## Claims

1. Package made from semi-rigid material, comprising a compartment for an engine oil can or other liquid closed by a lid (30) and at least one wall (10) of which is extended by a flap (33), and a bag (100) for recovering liquid, made from flexible material with a filling orifice equipped with a rigid ring (110), **characterised by** the fact that the bag is mounted on said flap (33), under said lid (30), said wall (10) comprising a detachable part (14) leaving clear a window, so as to enable the orifice of the bag to emerge through it, after having detached the detachable part (14) and folded the flap (33) against the internal face of said wall (10).

2. Package according to the preceding claim, in which the rigid ring (110) comprises a means of fixing to the flap (33).

3. Package according to one of the preceding claims, in which the detachable wall portion (14) is cut and grooved so as to form a funnel after shaping.

4. Package according to the preceding claim, in which said wall portion (14) has grooves disposed in a star.

5. Package according to one of the preceding claims, in which a wall (20) comprises at least one opening for gripping the handle of a can placed inside.

6. Package according to one of the preceding claims, comprising a means of reducing its height when it is in a position of recovering used liquid.

7. Package according to the preceding claim, in which said means consists of two parallel grooves formed in the walls adjacent to the wall containing the detachable part.

## Patentansprüche

1. Verpackung aus einem halbsteifen Material, die einen Raum für einen Kanister mit Motoröl oder einer anderen Flüssigkeit, der mit einem Deckel (30) verschlossen wird und von dem mindestens eine Seite (10) durch eine Klappe (33) verlängert wird, und ein Fach (100) zum Auffangen von Flüssigkeit, aus einem weichen Material, mit einer Füllöffnung, die mit einem steifen Ring (110) ausgestattet ist, umfasst, **dadurch gekennzeichnet, dass** das Fach auf der Klappe (33) unter dem Deckel (30) angebracht ist, wobei die Wand (10) einen lösbaren Teil (14) umfasst, der ein Fenster freigibt, um es der Öffnung des Fachs zu ermöglichen, durch diese hindurch auszumünden, nachdem der lösbare Teil (14) gelöst wurde und die Klappe (33) gegen die Innenseite der Wand (10) umgebogen wurde.

2. Verpackung nach dem vorhergehenden Anspruch, wobei der steife Ring (110) ein Mittel zum Befestigen an der Klappe (33) umfasst.

3. Verpackung nach einem der vorhergehenden Ansprüche, wobei der lösbare Wandabschnitt (14) derart ausgeschnitten und gerillt ist, dass er nach dem Aufstellen einen Trichter bildet.

4. Verpackung nach dem vorhergehenden Anspruch, wobei der Wandabschnitt (14) sternförmig angeordnete Rillen umfasst.

5. Verpackung nach einem der vorhergehenden Ansprüche, wobei eine Wand (20) mindestens eine Öffnung zum Ergreifen des Griffs eines im Innern angeordneten Kanisters umfasst.

6. Verpackung nach einem der vorhergehenden Ansprüche, umfassend ein Mittel zum Reduzieren ihrer Höhe, wenn sie sich in der Position zum Auffangen verbrauchter Flüssigkeit befindet.

7. Verpackung nach dem vorhergehenden Anspruch, wobei das Mittel aus zwei parallelen Rillen besteht, die in den Wänden neben der Wand, die den lösbaren Teil enthält, eingerichtet sind.
